# EUROPEAN PATENT SPECIFICATION

(11) **EP 2 736 009 B1**
(45) Date of publication and mention of the grant of the patent: **03.05.2017**
(21) Application number: 11869958.6
(22) Date of filing: 12.08.2011
(51) Int. Cl.: G06Q 50/00, H04W 4/02, G06Q 30/00

(54) **METHOD AND SYSTEM FOR PROVIDING A SOCIAL MUSIC SERVICE USING AN LBS, AND RECORDING MEDIUM FOR RECORDING A PROGRAM FOR EXECUTING THE METHOD**
VERFAHREN UND SYSTEM ZUR BEREITSTELLUNG EINES SOZIALEN MUSIKDIENSTES UNTER VERWENDUNG EINER LBS SOWIE AUFZEICHNUNGSMEDIUM ZUR AUFZEICHNUNG EINES PROGRAMMS ZUR AUSFÜHRUNG DES VERFAHRENS
PROCÉDÉ ET SYSTÈME DE FOURNITURE D'UN SERVICE DE MUSIQUE SOCIAL À L'AIDE D'UN LBS, ET SUPPORT D'ENREGISTREMENT POUR ENREGISTRER UN PROGRAMME POUR EXÉCUTER LE PROCÉDÉ

(30) Priority: 22.07.2011 KR 20110072868
(43) Date of publication of application: 28.05.2014
(73) Proprietor: S.M. Entertainment Co., Ltd., Seoul 135-906 (KR)
(72) Inventor: JEON, Su Jin, Seoul 139-240 (KR)
(74) Representative: Zech, Stefan Markus
(86) International application number: PCT/KR2011/005932
(87) International publication number: WO 2013/015476

(56) References cited:
- JP-A- 2009 289 244
- JP-A- 2009 289 244
- KR-A- 20090 001 745
- US-A1- 2007 233 743
- US-A1- 2008 320 078
- US-A1- 2010 077 017
- US-A1- 2010 280 920

## Description

### Technical Field

The present invention relates, in general, to a method and system for providing a new social music service for matching the concepts of music and a place using a location based service (LBS), and a recording medium in which a program for executing the method is recorded.

### Background Art

The people could ordinarily and naturally listen to a popular song, a new song, or a song suitable for a place which is played from loudspeakers placed in front of record shops or stores, or the like on the streets while walking around the streets. However, as mobile devices, such as smart phones, MP3 players, and the like have been rapidly popularized, such record shops have become obsolete and have gradually disappeared. In particular, these days in any busy city area it's typical to see people privately listening to music from their portable devices using headphones.

Accordingly, in the past various shops used to play music from loudspeakers placed in front of their stores & shops in specific street such as places around the Gangnam Station, Myeongdong or Apgujeong, this broadcasted music set the musical atmosphere for a street/neighborhood, but this musical atmosphere has been greatly reduced.

Meanwhile, as the use of mobile devices has expanded, various services through such mobile devices have been revitalized. A representative example of the services is applications relating to the provision of a music service. These music applications provide users with various songs in a web casting method through technologies which are not in violation of Copyright laws based on expanded wireless communication technologies of mobile devices. However, these technologies provide only music limited by genre or a category, or the like, and thus it would be impossible to induce new feelings to a user by introducing a specific concept. That is, the service provides only music as it is, but is not a social networking approach.

Meanwhile, a mobile device may provide various services using a location based service (LBS). Even with regard to a music application, a technology for downloading and regenerating music using the LBS has been developed.

The representative technology is Korean Laid-Open Publication No. 2009-0001745 entitled "System and method for providing music information using the Internet," and a service through the system and method is carried out in such a manner that a location of a mobile terminal is identified, information on music suitable for the corresponding location is transmitted from a server and the music is then played from a mobile device. To do so, a music list appropriate to a landscape of a mountain, sea or the like should be prepared in advance, attributes of a place where a user's mobile terminal is positioned should be also provided in advance, and thus the music list and the provided attributes are needed to match with the corresponding music.

In light of the fact that the LBS is used, although this service may be considered to be a major step forward in the technology, it enables the user to listen to music by just passively downloading music suitable for his or her location, but does not enable the user not to directly select music which may be played with regard to a corresponding place. Moreover, in light of the fact that the service is used by only one person rather than that the service is exchanged by various persons, the service is not an approach in view of a social network.

Another conventional art is Korean Laid-Open Patent Publication No. 2010-0070213 entitled "MP3 player using a GPS." A service through this invention is also intended to enable a user to conveniently enjoy music even in a subway or a public place by downloading music appropriate for an adjacent location using the LBS, playing it, and controlling volumes automatically to be suitable for a peripheral atmosphere. However, even though this service corresponds to a music service based on places, it enables a user to download a recommended song unilaterally and to play it, and thus in light of the fact that providing of the music service is performed in terms of only a simple one-way relationship, rather than that of a variety of people sharing the service while influencing each other, the service is not a social networking approach.

A further conventional art is US 2007/0233743 A1, which discloses a system for selecting musical media files from a plurality of available media files for play to a user based upon a current location of the user. Environmental conditions proximal to the electronic device are also considered. However, interactions with other users are not disclosed.

Accordingly, a music service which enables a variety of people to share music information while influencing each other using mobile devices and an LBS service, namely, a music service with the described new concept through connection of a location, music and a person is needed.

The matters described as the background arts are only intended to increase the understanding of the background of the present invention, but should not be recognized as being prior arts which have already been known to those skilled in the art.

### Disclosure

### Technical Problem

Accordingly, the present invention has been made keeping in mind the above problems, and an object of the present invention is to provide a method and system for providing a new social music service using a location based service (LBS) wherein the social music service is a new location-linked music service in which a location, music and person are connected to each other, and that enables people to influence each other, and another object of the present invention is to provide a recording medium in which a program for executing the system and the method is recorded.

### Technical Solution

In order to accomplish the above objects, the present invention provides a method for providing a social music service using a location based service (LBS), the method including: an uploading step of receiving data on a location at which music is to be posted and corresponding music data transmitted from a user terminal and then storing the data in a server; a tracking step of tracking the location of the user terminal using the LBS in the server and detecting whether or not the user terminal has come within a predetermined distance from the posting location; and a playing step of transmitting, from the server to the user terminal, music data matched with the corresponding location when the user terminal has come within the predetermined distance from the posting location, providing, from the server to the user terminal, a region menu for selection of a posting location, and transmitting music data matched with the positing location selected by receiving feedback for the selection to the user terminal, and computing the ranks of corresponding music at corresponding posting position by the server providing a recommended menu for the corresponding music to the user terminal which has transmitted music data, and receiving feedback (S180), wherein the selection playing step is performed by transmitting music data in order from highly placed music data computed through the rank computing step at the corresponding region when the selected region includes various posting positions.

The playing step may be performed by transmitting music data corresponding to a new posting location where a user is positioned at the time of playing of the pre-transmitted music data being finished when the user terminal is judged to be moved in the posting location during the playing of the music data.

The playing step may be performed by transmitting music data corresponding to a posting location of the nearest distance to the user terminal to the user terminal.

The playing step may be performed by transmitting music data corresponding to a new posting location at the time of the playing of the pre-transmitted music data being finished when the user terminal is judged to be changed in the posting location during the playing of the music data.

The uploading step may be performed by receiving music data stored in the user terminal transmitted from the user terminal and storing it in the server.

The uploading step may be performed by judging whether or not the music data to be transmitted from the user terminal is present in the music server S60, and matching the music data with a music server in the server when the music data to be transmitted from the user terminal is present in the music server as a result of the judgment, or receiving the music data transmitted from the user terminal and storing it in the server when the music data is not present in the music server.

The method may further include a preparing step of providing, from the server to the user terminal, a location list for enabling music to be posted using the LBS.

The preparing step may be performed by providing a list of locations being within a predetermined distance from the user terminal.

The playing step may further include transmitting, from the server to the user terminal, a pre-prepared advertisement of the nearest posting location to the user terminal when music is played per a predetermined time or at a predetermined number of times being played.

The playing step may further include a rank computing step of corresponding music at a corresponding posting location by the server providing a recommended menu of the corresponding music to the user terminal which has transmitted music data, and receiving feedback.

The playing step may be performed by transmitting music data in order from highly placed music data through the rank computing step among the music data matched with the corresponding location to the user terminal.

The rank computing step may further include a music map providing step of transmitting map data, in which a highly placed artist or a title of music for each predetermined posting location is indicated on a world map or a map of a certain region, to the user terminal.

The method may further include: an information inputting step of receiving, from the server to the user terminal, the names of preferring artists and storing it; and a fan map providing step of transmitting map data, in which a distribution level of user terminals designated with the provided artists whom the users prefer is indicated on a world map or a map of a certain region, to the user terminal.

The playing step may further include an information transmitting step of transmitting posting information including a posting location, a title of music, and an identifier of the user terminal in which corresponding music is posted to the user terminal.

Meanwhile, the present invention provides a system for providing a social music service using a location based service (LBS), which is capable of realizing the method, the system including a server configured to receive and store data on a location at which music is to be posted and corresponding
music data transmitted from a user terminal, track a location of the user terminal using the LBS, and transmit music data matched with a corresponding location to the user terminal when the user terminal has come within a predetermined distance from the posting location.

The server may transmit, to the user terminal, music data corresponding to a posting location of the nearest distance to the user terminal.

The system may further include a music server in which a plurality of music data is pre-stored, wherein the server may judge whether or not music data to be transmitted from the user terminal is present in the music server, and may match corresponding music data with the music sever when it is present in the music server or may store music data in the music server by receiving the music data transmitted from the user terminal when the music data to be transmitted from the user terminal is not present in the music server.

Furthermore, the present invention provides a recording medium, including a program for executing a method for providing a social music server using an LBS recorded therein, the method, including: an uploading step of receiving data on a location at which music is to be posted and corresponding music data from a user terminal and then storing the data in a server; a tracking step of tracking the location of the user terminal using the LBS in the server and detecting whether or not the user terminal has come within a predetermined distance from the posting location; and a playing step of transmitting, from the server to the user terminal, music data matched with the corresponding location when the user terminal has come within the predetermined distance from the posting location.

Also, the playing step may enable music data corresponding to a positing location of the nearest distance to the user terminal transmitted from the server to the user terminal to be played.

### Advantageous Effects

According to the method and system for providing the social music server using the LBS, and the recording medium in which a program for executing the method is recorded as described above, the social music service, that is a new location-linked music service of connecting a location, music and person and enables the people to influence each other or be influenced by each other, can be provided.

Also, since a concept of securing a location to be posted in advance by uploading music is introduced, the users can have competition thereamong, and since the music charts are determined based on corresponding locations, competition can be caused, and music charts targeted for the general public can be obtained.

Also, since music suitable for each of corresponding places in various regions is set, the people can be reminded of the period in which they could listen to various kinds of music while walking around the streets, and a user can leave behind his or her memory via having a song they associate with the area uploaded to the song list for the area, and thus the user can share music with other persons naturally.

Moreover, since various kinds of music are continuously played in such a manner that when the user moves, music suitable for a new place is played using the LBS, a running time for applications is naturally extended, and accordingly, customized advertising suitable for corresponding regions may be performed.

Furthermore, places and music may be integrated by the users' participation, reliability of music ranking may be formed, each country, city, and place in the world may be naturally promoted, and cultural promotions, such as the Korean Wave may be also carried out. Also, since the ranks of music, which are subject to the promotion, are steadily updated by the users, the circulation and replacement of contents may be naturally realized.

Meanwhile, when a user would like to upload music which he or she likes or has accidentally listened to music which he or she likes, the user can buy a desired music source immediately, and thus this service can be a great help to copyright culture support.

### Description of Drawings

FIGS. 1 and 2 are view showing a method for providing a social music service using a location based service (LBS) according to one embodiment of the present invention;
FIG. 3 is a view showing a system for providing a social music service using a location based service (LBS) according to one embodiment of the present invention; and
FIG. 4 is a view showing a situation in which the social music service using the LBS according to the one embodiment of the present invention is embodied in a user terminal.

| | |
|---|---|
| S20: Information inputting step | S51: Uploading step |
| S110: Playing step | S160: Advertising step |
| S180: Rank computing step | S200: Music map providing step |

### Mode for Invention

Hereinbelow, configurations and operations of the present invention will be described in detail with reference to the accompanying drawings.

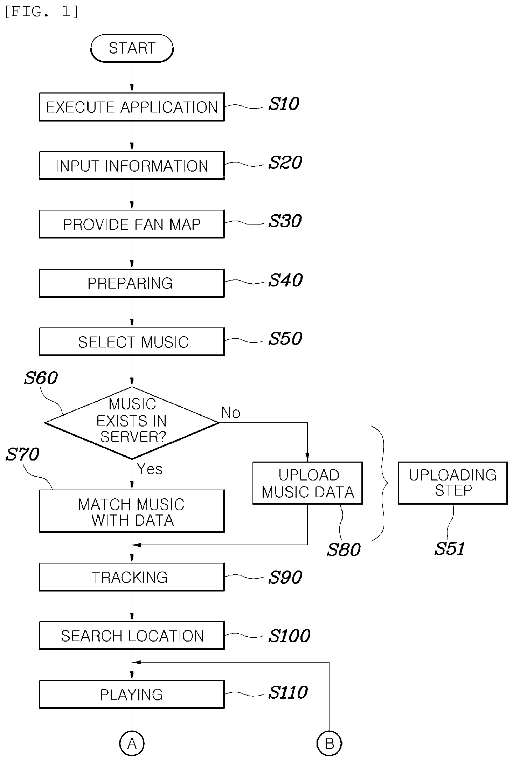

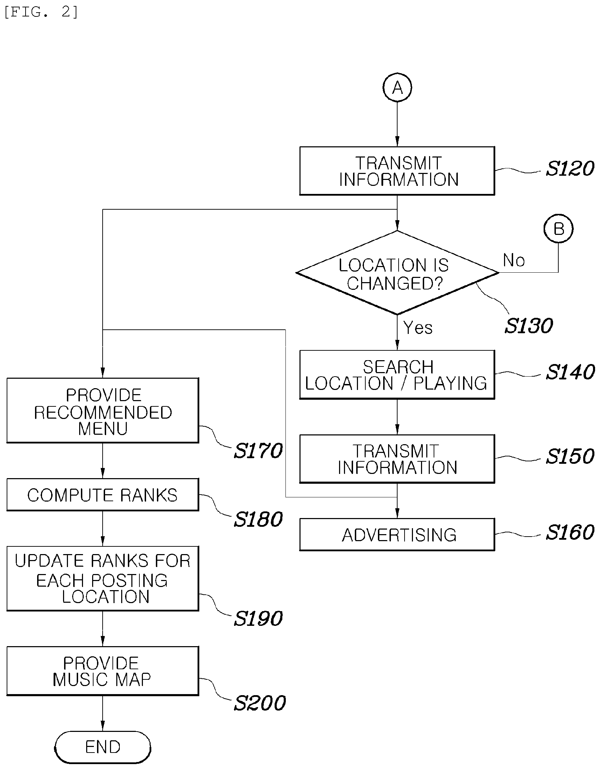

FIGS. 1 and 2 are views showing a method for providing a social music service using a location based service (LBS) according to one embodiment of the present invention. A method for providing a social music service according to the present embodiment of the invention includes: an uploading step of receiving data on a location at which music is to be posted and corresponding music data from a user terminal and then storing the data in a server S51; a tracking step of tracking the location of the user terminal using the LBS in the server and detecting whether or not the user terminal has come within a predetermined distance from the posting location S90; and a playing step of transmitting, from the server to the user terminal, music data matched with the corresponding location when the user terminal has come within the predetermined distance from the posting location S110.

The present invention provides a service intended to induce people to directly make the uploading and downloading of music associated with locations, regions or buildings by the user directly uploading music in which he or she associates with a specific place in memory, music which he or she likes, or music considered to be suitable for the region so that when a person passes through the corresponding region, the music can be automatically played in he or her mobile device.

The posting refers to an action of designating various kinds of music by correlating the music with specific locations, and the regions or locations may be set at various places in the entire area of Republic of Korea or in the whole world and may be also set in a virtual space of the universe, the stars or the like. Through the posting, a world-wide social music service may be provided so that the people can share music along with corresponding locations through writing, writing of comments, pushing messages, and the like rather than simply loading and downloading music, and so that music ranking can be determined per each place by adding a recommendation function, thereby enabling the order of priority to be set naturally. This can allow the general public of a relevant region of various age groups to form a music chart and can improve reliability of the music chart.

Furthermore, the user terminal refers to both a terminal of a user who unloads data and a terminal of a user who downloads data, and the uploading and downloading can be simultaneously carried out through one terminal. The terminal may include various mediums capable of performing communication, such as a computer, a mobile device and the like connected to the internet.

Hereinafter, the method for providing the social music server using the LBS according to the present embodiment of the invention will be described in more detail with reference to FIGS. 1 and 2.

First, each of the users may download and install an application for a corresponding service in his or her mobile device S10. Furthermore, when executing the application, the user may use the service by logging on through a procedure for joining. Furthermore, an information inputting step of storing the names of preferring artists provided from the user terminal is performed through the server S20. In the information inputting step, the user inputs his or her ID, password and the like, receives information on the name of an artist whom the user prefers provided from the user terminal, and stores the information along with personal information in the server. Also, since the service may be used by buying a sound source for downloading, payment information may be also needed.

According to the spread of use of the application, when various users use the service, a fan map on specific artists may be provided S30. The fan map refers to a map in which a distribution level of user terminals designated with the preferring artists is indicated on a world map or a map of a certain region based on the corresponding artists, and as the fan map is transmitted to the user terminal and is then displayed, the distribution level of fans may be found on a global scale. In particular, this function may be a good means which can globally promote Korean national brands under the current situation in which an environment in which the Korean Wave is strong.

Meanwhile, explaining music posting which is the point of the present invention, the user can post music which he or she prefers through his or her mobile device or a computer connected to the internet at a specific place. For this, the server performs a preparing step of providing a list of locations which enables music to be posted in the user terminal using the LBS S40.

In the preparing step, a list of posting locations being present in a remote place may be provided so that the user can select a location, but, preferably, it will be more effective to provide a list of locations being present within a certain distance from the user terminal.

The reason is because popular music in Republic of Korea will be better to be determined by Korean people, and this is also applied to a specific region in like manner, and thus the reason also is because it is required to accurately reflect a local character of the corresponding region. Also, by enabling posting to be performed at a place where the user goes frequently, it is intended to allow the user to naturally exchange music information with other persons who go to the place frequently. Furthermore, it is intended to prevent popular songs of a corresponding region from being rigged by specific fans easily posting even at inappropriate places. Accordingly, the server provides only a list of locations being present within a predetermined distance from the user terminal using the LBS so that the user can post music suitable for a location. That is, in a case of uploading, it is intended to reconcile the user and a posting region physically in some degree.

When the posting location is designated through the preparing step, the user selects music to be posted and uploads it S50. That is, an uploading step of receiving data on a location at which music is to be posted and corresponding music data transmitted from a user terminal and then storing the data in a server is carried out S51.

The uploading step S51 is performed by receiving music data stored in the user terminal transmitted from the user terminal and storing the data in the server, and this can promote the users' purchases of sound sources and can prevent the users from violating the Copyright Act.

Furthermore, the uploading step S51 is performed by judging whether or not music data to be transmitted from the user terminal is present in the music server S60, and matching music data with a music server in the server when the music data to be transmitted from the user terminal is present in the music server as a result of the judgment S70, or receiving music data transmitted from the user terminal and storing it in the server when the music data is not present in the music server S80. That is, the matter that when the user prepares a separate music server, he or she can post only music rightfully owned by the user is identical to the previous service, and just in the uploading step, the uploading can be more rapidly performed by matching music data with the music server.

By completing matching of the music data with the music server, the real user makes only the link for a corresponding location between the server and music server not uploading the music data. However, since there is a limit in pre-preparing the user's own music or the third world countries' music in the music server, in this case, the user may directly upload his or her own music data in the server or the music server through wireless communications.

That is, posting performed in such a way can induce the user to purchase a sound source for the posting, and at the same time, and the user's inconvenience, which may occur at the time of uploading, can be minimized by ensuring rapid posting at the time of uploading and preventing wireless communications from overloading.

Meanwhile, in terms of the user who listens to music by downloading the music except for the user terminal which performs posting, in the server with executing an application, a location of the corresponding user is always traced using the LBS.

Furthermore, when the user terminal has come within the predetermined distance from the posting location, a playing step of transmitting, from the server to the user terminal, music data matched with the corresponding location to enable music to be played is performed S110. Alternately, the playing step may be performed by transmitting music data corresponding to a posting location of the nearest distance to the user terminal to the user terminal. That is, a location of the user terminal is continuously traced by the server, and thus when the user terminal approaches to a predetermined distance at a neighboring posting location, or the user terminal has come within the predetermined distance from the posting location, the posting location is searched, and music data matched with the location is transmitted to the user terminal, thereby enabling music to be played.

Meanwhile, in the playing step S110, an information transmitting step of transmitting posting information including a posting location, a title of music, an identifier of the user terminal in which corresponding music is posted to the user terminal may be carried out S120.

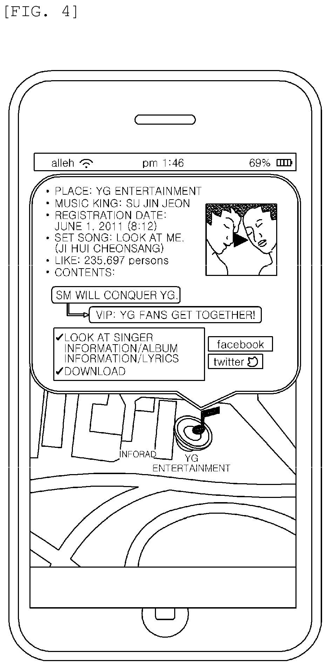

FIG. 4 is a view showing the user terminal in which the playing step and the information transmitting step are carried out, and the user terminal may play music posted by information provided through the server and may display a posting location, a title of music, and an identifier of the user terminal in which the corresponding music is posted. Also, the user terminal may perform a messing service and may show the identifier of a user who performs posting so that the ranks of music in corresponding postings and a person who uploads corresponding music may be seen. This enables many users to use the service competitively for posting music and to purchase music sources.

Meanwhile, when the user terminal is judged to be moved in the posting location during the playing of the music data S130, the playing step S110 is performed by transmitting music data corresponding to a new posting location where a user is positioned at the time of the playing of pre-transmitted music data being finished S140.

Alternately, when a posting location of the nearest distance to the user terminal is judged to be changed during the playing of the music data S130, the playing step S110 is performed by transmitting music data corresponding to a new posting location at the time of the playing of pre-transmitted music data being finished S140.

That is, according to the user's movement, a posting location close to the user is also changed, and thus, this is reflected in real time using the LBS. However, it is preferable that the music be played in such a manner, that after playing of a previous music is finished, another music selection according to a new posting position at the time of the finishing is played, rather than that playing of the previous music is stopped in the middle thereof, and another music selection of a next posting position is played.

Meanwhile, the playing step S110 may include an advertising step of transmitting, from the server to the user terminal, a pre-prepared advertisement of the nearest posting location to the user terminal whenever music is played per a predetermined time or at a predetermined number of times being played S160. In the case of the advertisement, local advertisement for a corresponding region may be maintained by posting it in a sound, image, flash, video form, and other forms, and accordingly, when a predetermined song or more are played in the user terminal from the server, local advertisement of a corresponding posting location of the user terminal may be sent out, or when a predetermined time or more passes, the corresponding local advertisement of a peripheral region of the user terminal may be transmitted to the user terminal so that the advertisement can be played.

Also, the playing step S110 includes a rank computing step S180 of corresponding music at a corresponding posting location by the server providing a recommended menu of the corresponding music to the user terminal which has transmitted music data S170 and receiving feedback. Furthermore, the playing step S110 is performed by transmitting music data in order from highly placed music data through the rank computing step among the music data matched with the corresponding location to the user terminal.

For example, when a recommended menu expressed such as "Like" and the like is provided on the screen of a user terminal on which the music is played, and the user selects the menu so that the number of times being recommended can be increased, and thus ranks of the music in the corresponding post can be also increased S190. Through this step, the competitiveness of ranks may spread out at a measurement location, and the users who posted music at the corresponding location may feel proud when the ranks of their own uploaded music moves higher. Also, this phenomenon may be made by the activities of fans for a specific artist, such as a specific idol group.

Also, music data is sequentially provided from the server so that music, which is played when the general users go through corresponding locations, can be played in order from highly placed music in ranking through the recommendation process.

Furthermore, the rank computing step S180 may include a music map providing step of transmitting map data, in which highly placed artists or the titles of highly placed songs are indicated for each predetermined posting location on a world map or a map of a certain region, to the user terminal S200.

This music map is similar to the fan map as previously described, but an object thereof is the title of music or artists, and a world-wide music trend can be seen at a glance by indicating music or artists having high popularity resulting from computing the ranks on the map as a distribution chart. Furthermore, the trend may vary according to regions, may be understood based on music posting results of actual posting places, and thus the music map may have high reliability as substantial and objective data since various users participate in the uploading of music and computing of ranks.

Meanwhile, the playing step S110 may include a selection playing step of providing, from the server to the user terminal, a region menu which enables a posting location to be selected, receiving feedback on the selection, and transmitting music data matched with the selected posting location to the user terminal. That is, the user may listen to posted music of a corresponding location only when the user moves to the corresponding location, or may select a desired region through the user terminal to listen to popular posted music of the corresponding region.

This service may be understood as a concept of a virtual travel, and may enable the users in Korea or the like to listen to the most popular posted music in New York. In reverse, this service may enable the users in Europe to easily interact with posted music which is popular in Seoul or a place around the Gangnam Station, so that the region can be promoted, and the Korean Wave can be expanded. In particular, it is effective in inducing the user's purchase of music sources naturally through this service.

Also, the selection playing step is characterized by transmitting of music data in order from highly placed music data in ranks to the user terminal through the rank computing step in the corresponding region to the user terminal when the selected region includes various posting locations. That is, various locations in which music can be posted, such as places around Gangnam Station, a specific shop or department store in Seoul may be provided. This means that when a region selected by the user is "Seoul" including these regions, music in order from highly placed music in popularity among all posted music in Seoul is played immediately. Through this service, since the user can see real street music charts for each country, this service is very effective in promoting music, places and culture in terms of a world-wide use range thereof.

Additionally, the method for providing the social music service using the LBS according to the present invention may be linked with a social network service (SNS). As one example, the users may make friends through the user terminals, and accordingly, when a user's friend listens to music, this may be pushed as notification message to the user. The pushing is intended to provide a notification, such as text messages even when a relevant application is not being driven, and is one form of a background service. This enables the users to share music information to each other, to listen to music which is listened to by the users' friends through the SNS, and also enables the recommendation of relevant music to be increased by introducing the relevant music to friends.

Meanwhile, according to the need, the order of each of the steps may be reversed, and the steps may be also provided. This could be naturally expected by those having ordinary skill in the relevant technical art. Accordingly, the steps described above should not be bound by the order.

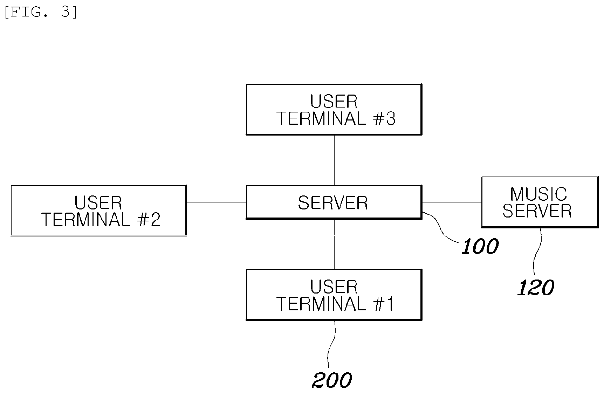

FIG. 3 is a view showing a system for providing a social music service using a location based service (LBS) according to one embodiment of the present invention. The system for providing the social music service using the LBS includes: a server 100 configured to receive and store data on a location at which music is to be posted and corresponding music data transmitted from a user terminal 200, track a location of the user terminal 200 using the LBS, and transmitting music data matched with a corresponding location to the user terminal 200 when the user terminal 200 has come within a predetermined distance from the posting location.

Furthermore, the server 100 may transmit, to the user terminal 200, music data corresponding to a posting location of the nearest distance to the user terminal 200.

Also, the system may further include a music server 120 in which a plurality of music data is pre-stored, wherein the server 100 may judge whether or not music data to be transmitted from the user terminal 200 is present in the music server 120, and may match corresponding music data with the music sever 120 when it is present in the music server 120 or may store music data in the server 100 or in the music server 120 by receiving the music data transmitted from the user terminal 100 when the music data to be transmitted from the user terminal is not present in the music server 120. The system for providing the social music server using the LBS may be sufficiently supported by the previous description on the method for providing the social music server using the LBS, and thus the detailed description thereon will be omitted.

Meanwhile, the application for implementing the method for providing the social music service using the LBS in the user terminal may be defined as follows. A recording medium in which a program for executing the method for providing the social music server using the LBS is recorded is configured to execute the method for providing the social music server using the LBS, including: an uploading step of receiving data on a location at which music is to be posted and corresponding music data from a user terminal and then storing the data in a server; a tracking step of tracking the location of the user terminal using the LBS in the server and detecting whether or not the user terminal has come within a predetermined distance from the posting location; and a playing step of transmitting, from the server to the user terminal, music data matched with the corresponding location when the user terminal has come within the predetermined distance from the posting location.

Also, the playing step S110 may enable music data corresponding to a positing location of the nearest distance to the user terminal transmitted from the server to the user terminal to be played. Furthermore, a recording medium in which a program for executing the method for providing the social music service using the LBS is recorded is installed in and operated through the user terminal so that the function thereof can be shown. Even in the case where the recording medium is maintained in a state of being stored in the server, and is transmitted and distributed through other wireless communications such as the internet, it should be naturally included in the scope of rights as the same form.

Although the embodiments of the present invention have been disclosed for illustrative purposes, those skilled in the art will appreciate that various modifications, additions and substitutions are possible, without departing from the scope of the invention as disclosed in the accompanying claims.

## Claims

1. A method for providing a social music service using a location based service (LBS), the method comprising:
an uploading step of receiving data on a location at which music is to be posted and corresponding music data from a user terminal and then storing the data in a server (S51);
a tracking step of tracking the location of the user terminal using the LBS in the server and detecting whether or not the user terminal has come within a predetermined distance from the posting location (S90); and
a playing step of
- transmitting, from the server to the user terminal, music data matched with the corresponding location when the user terminal has come within the predetermined distance from the posting location (S110),
- providing, from the server to the user terminal, a region menu for selection of a posting location, and transmitting music data matched with the positing location selected by receiving feedback for the selection to the user terminal, and
- computing the ranks of corresponding music at corresponding posting position by the server providing a recommended menu for the corresponding music to the user terminal which has transmitted music data, and receiving feedback (S180), wherein the selection playing step is performed by transmitting music data in order from highly placed music data computed through the rank computing step at the corresponding region when the selected region includes various posting positions.

2. The method of claim 1, wherein the playing step (S110) is performed by transmitting music data corresponding to a new posting location where a user is positioned at the time of the playing of pre-transmitted music data being finished when the user terminal is judged to be moved in the posting location during the playing of the music data.

3. The method of claim 1, wherein the playing step (S110) is performed by transmitting music data corresponding to a posting location of the nearest distance to the user terminal to the user terminal.

4. The method of claim 3, wherein the playing step (S110) is performed by transmitting music data corresponding to a new posting location at the time of the playing of pre-transmitted music data being finished when the user terminal is judged to be changed in the posting location during the playing of the music data.

5. The method of claim 1, wherein the uploading step (S51) is performed by receiving music data stored in the user terminal transmitted from the user terminal and storing it in the server.

6. The method of claim 1, wherein the uploading step (S51) is performed by matching music data with a music server in the server when the music data to be transmitted from the user terminal is present in the music server as a result of judging whether or not the music data is present in the music server or receiving music data transmitted from the user terminal and storing it in the server when the music data is not present in the music server.

7. The method of claim 1, further comprising a preparing step of providing, from the server to the user terminal, a location list for enabling music to be posted using the LBS (S40).

8. The method of claim 7, wherein the preparing step (S40) is performed by providing a list of locations being within a predetermined distance from the user terminal.

9. The method of claim 1, wherein the playing step (S110) further comprises transmitting, from the server to the user terminal, a pre-prepared advertisement of the nearest posting location to the user terminal when music is played per a predetermined time or at a predetermined number of times being played (S160).

10. The method of claim 1, wherein the playing step (S110) further comprises a rank computing step of corresponding music at a corresponding posting location by the server providing a recommended menu of the corresponding music to the user terminal which has transmitted music data and receiving feedback (S180).

11. The method of claim 10, wherein the playing step (S110) is performed by transmitting music data in order from highly placed music data through the rank computing step among the music data matched with the corresponding location to the user terminal.

12. The method of claim 10, wherein the rank computing step (S180) further comprises a music map providing step of transmitting map data, in which a highly placed artist or a title of music for each predetermined posting location is indicated on a world map or a map of a certain region, to the user terminal (S200).

13. The method of claim 1, further comprising: an information inputting step of receiving, from the server to the user terminal, the names of preferring artists and storing it (S20); and a fan map providing step of transmitting map data, in which a distribution map of user terminals related to preferring of the above provided artists is indicated on a world map or a map of a certain region, to the user terminal (S30).

14. The method of claim 1, wherein the playing step (S110) further comprises an information transmitting step of transmitting posting information including a posting location, a title of music, an identifier of the user terminal in which corresponding music is posted to the user terminal (S120).

## Patentansprüche

1. Verfahren zur Bereitstellung eines sozialen Musikdienstes unter Verwendung eines standortbezogenen Dienstes (LBS), wobei das Verfahren Folgendes umfasst:
einen Hochladeschritt zum Empfangen von Daten an einem Standort, an dem Musik bereitzustellen ist, und entsprechender Musikdaten von einem Benutzerendgerät und dann Speichern der Daten auf einem Server (S51);
einen Verfolgungsschritt zum Verfolgen des Standorts des Benutzerendgeräts unter Verwendung des LBS in dem Server und Ermitteln, ob sich das Benutzerendgerät innerhalb einer vorgegebenen Entfernung dem Bereitstellungsstandort genähert hat oder nicht (S90); und
einen Wiedergabeschritt zum
- Senden von Musikdaten, die dem entsprechenden Standort zugeordnet sind, vom Server an das Benutzerendgerät, wenn sich das Benutzerendgerät innerhalb der vorgegebenen Entfernung dem Bereitstellungsstandort genähert hat (S110),
- Bereitstellen eines Gebietsmenüs zur Auswahl eines Bereitstellungsstandorts vom Server an das Benutzerendgerät und Senden von Musikdaten, die dem Bereitstellungsstandort zugeordnet sind und durch Empfangen einer Rückmeldung zur Auswahl ausgewählt werden, an das Benutzerendgerät, und
- Berechnen der Ränge entsprechender Musik an einem entsprechenden Bereitstellungstandort durch den Server, der ein empfohlenes Menü für die entsprechende Musik an das Benutzerendgerät, das Musikdaten gesendet hat, bereitstellt und eine Rückmeldung empfängt (S180), wobei der Auswahlwiedergabeschritt durchgeführt wird durch Senden von Musikdaten in einer Reihenfolge von hochplatzierten Musikdaten, die durch den Rangberechnungsschritt für das entsprechende Gebiet berechnet wurde, wenn das ausgewählte Gebiet verschiedene Bereitstellungsstandorte umfasst.

2. Verfahren nach Anspruch 1, wobei der Wiedergabeschritt (S110) durchgeführt wird durch Senden von Musikdaten, die einem neuen Bereitstellungsstandort entsprechen, an dem sich ein Benutzer befindet, zu dem Zeitpunkt, zu dem die Wiedergabe von zuvor gesendeten Musikdaten abgeschlossen ist, wenn beurteilt wird, dass sich das Benutzerendgerät an den Bereitstellungsstandort während der Wiedergabe der Musikdaten bewegt hat.

3. Verfahren nach Anspruch 1, wobei der Wiedergabeschritt (S110) durchgeführt wird durch Senden von Musikdaten, die einem Bereitstellungsstandort mit der kürzesten Entfernung zum Benutzerendgerät entsprechen, an das Benutzerendgerät.

4. Verfahren nach Anspruch 3, wobei der Wiedergabeschritt (S110) durchgeführt wird durch Senden von Musikdaten, die einem neuen Bereitstellungsstandort entsprechen, zu dem Zeitpunkt, zu dem die Wiedergabe von zuvor gesendeten Musikdaten abgeschlossen ist, wenn beurteilt wird, dass das Benutzerendgerät den Bereitstellungsstandort während der Wiedergabe der Musikdaten gewechselt hat.

5. Verfahren nach Anspruch 1, wobei der Hochladeschritt (S51) durchgeführt wird durch Empfangen von auf dem Benutzerendgerät gespeicherten Musikdaten, die vom Benutzerendgerät gesendet werden, und Speichern derselben auf dem Server.

6. Verfahren nach Anspruch 1, wobei der Hochladeschritt (S51) durchgeführt wird durch Zuordnen von Musikdaten zu einem Musikserver auf dem Server, wenn die vom Benutzerendgerät zu sendenden Musikdaten auf dem Musikserver vorhanden sind, infolge einer Beurteilung, ob die Musikdaten auf dem Musikserver vorhanden sind oder nicht, oder Empfangen von vom Benutzerendgerät gesendeten Musikdaten und Speichern derselben auf dem Server, wenn die Musikdaten nicht auf dem Musikserver vorhanden sind.

7. Verfahren nach Anspruch 1, ferner umfassend einen Vorbereitungsschritt zum Bereitstellen einer Standortliste vom Server an das Benutzerendgerät, um zu ermöglichen, dass Musik unter Verwendung des LBS bereitgestellt wird (S40).

8. Verfahren nach Anspruch 7, wobei der Vorbereitungsschritt (S40) durchgeführt wird durch Bereitstellen einer Liste von Standorten, die sich innerhalb einer vorgegebenen Entfernung vom Benutzerendgerät befinden.

9. Verfahren nach Anspruch 1, wobei der Wiedergabeschritt (S110) ferner Senden einer vorgefertigten Werbung für den zum Benutzerendgerät nächsten Bereitstellungsstandort vom Server an das Benutzerendgerät, wenn Musik für eine vorgegebene Zeit oder mit einer vorgegebenen Häufigkeit wiedergegeben wird (S160), umfasst.

10. Verfahren nach Anspruch 1, wobei der Wiedergabeschritt (S110) ferner einen Rangberechnungsschritt für entsprechende Musik an einem entsprechenden Bereitstellungsstandort durch den Server, der ein empfohlenes Menü der entsprechenden Musik an das Benutzerendgerät, das Musikdaten gesendet hat, bereitstellt und eine Rückmeldung empfängt (S180), umfasst.

11. Verfahren nach Anspruch 10, wobei der Wiedergabeschritt (S110) durchgeführt wird durch Senden von Musikdaten in einer Reihenfolge von hochplatzierten Musikdaten gemäß dem Rangberechnungsschritt unter den Musikdaten, die dem entsprechenden Standort zugeordnet sind, an das Benutzerendgerät.

12. Verfahren nach Anspruch 10, wobei der Rangberechnungsschritt (S180) ferner einen Musikkartenbereitstellungsschritt zum Senden von Kartendaten, in denen ein hochplatzierter Interpret oder ein Musiktitel für jeden vorgegebenen Bereitstellungsstandort auf einer Weltkarte oder einer Karte eines bestimmten Gebiets angegeben ist, an das Benutzerendgerät (S200) umfasst.

13. Verfahren nach Anspruch 1, ferner umfassend: einen Informationseingabeschritt zum Empfangen der Namen bevorzugter Interpreten vom Server an das Benutzerendgerät und Speichern derselben (S20); und einen Fankartenbereitstellungsschritt zum Senden von Kartendaten, in denen eine Verteilungskarte von Benutzerendgeräten in Bezug auf die Bevorzugung der oben bereitgestellten Interpreten auf einer Weltkarte oder einer Karte eines bestimmten Gebiets angegeben ist, an das Benutzerendgerät (S30).

14. Verfahren nach Anspruch 1, wobei der Wiedergabeschritt (S110) ferner einen Informationssendeschritt zum Senden von Bereitstellungsinformationen, einschließlich eines Bereitstellungsstandorts, eines Musiktitels, einer Kennung des Benutzerendgeräts, in dem entsprechende Musik bereitgestellt wird, an das Benutzerendgerät (S120) umfasst.

## Revendications

1. Procédé pour fournir un service social musical en utilisant un service de géolocalisation (LBS), le procédé comprenant :
une étape de téléchargement de données reçues à un endroit où la musique doit être affectée et de données musicales correspondantes d'un terminal utilisateur, puis le stockage des données dans le serveur (S51) ;
une étape de suivi du suivi de l'endroit du terminal utilisateur en utilisant le LBS dans le serveur et en déterminant si le terminal utilisateur a atteint ou non l'endroit d'affectation (S90) sur une distance prédéterminée ; et
une étape de lecture pour
- la transmission, du serveur au terminal utilisateur, de données musicales associées à l'endroit correspondant lorsque le terminal utilisateur a atteint l'endroit d'affectation (S110) sur la distance prédéterminée,
- la mise à disposition, du serveur au terminal utilisateur, d'un menu de la région en vue de sélectionner un endroit d'affectation, et la transmission au terminal utilisateur de données musicales associées à l'endroit d'affectation et sélectionnées à la réception d'une réponse pour la sélection, et
- le calcul par le serveur des rangs de la musique correspondante à l'endroit d'affectation correspondant, fournissant un menu recommandé pour la musique correspondante au terminal utilisateur qui a transmis des données musicales, et la réception de la réponse (S180), l'étape de lecture étant sélectionnée au transfert des données musicales en partant des données musicales en tête calculées durant l'étape de calcul du rang à la région correspondante lorsque la région sélectionnée comprend divers endroits d'affectation.

2. Procédé selon la revendication 1, l'étape de lecture (S110) étant réalisée au transfert de données musicales correspondant à un nouvel endroit d'affectation où un utilisateur est positionné à la fin de la lecture de données musicales préalablement transmises, s'il est considéré que le terminal utilisateur a bougé dans l'endroit d'affectation durant la lecture des données musicales.

3. Procédé selon la revendication 1, l'étape de lecture (S110) étant réalisée au transfert au terminal utilisateur de données musicales correspondant à un endroit d'affectation dont la distance jusqu'au terminal utilisateur est la plus courte.

4. Procédé selon la revendication 3, l'étape de lecture (S110) étant réalisée au transfert de données musicales correspondant à un nouvel endroit d'affectation à la fin de la lecture de données musicales préalablement transmises, s'il est considéré que le terminal utilisateur a changé dans l'endroit d'affectation durant la lecture des données musicales.

5. Procédé selon la revendication 1, l'étape de téléchargement (S51) étant réalisée à la réception de données musicales stockées dans le terminal utilisateur et transmises du terminal utilisateur, et stockage desdites données sur le serveur.

6. Procédé selon la revendication 1, l'étape de téléchargement (S51) étant réalisée au classement de données musicales avec un serveur musical sur le serveur lorsque les données musicales à transmettre du terminal utilisateur sont présentes sur le serveur musical, suite à une considération si les données musicales sont présentes ou pas sur le serveur, ou réception de données musicales transmises du terminal utilisateur et stockage desdites données sur le serveur lorsque les données musicales ne sont pas présentes sur le serveur musical.

7. Procédé selon la revendication 1, comprenant en outre une étape de préparation pour la mise à disposition, du serveur au terminal utilisateur, d'une liste d'endroits afin de permettre la mise à disposition de la musique à envoyer en utilisant le LBS (S40).

8. Procédé selon la revendication 7, l'étape de préparation (S40) étant réalisée grâce à la mise à disposition d'une liste d'endroits se trouvant à une distance prédéfinie du terminal utilisateur.

9. Procédé selon la revendication 1, l'étape de lecture (S110) comprenant en outre la transmission, du serveur au terminal utilisateur, d'une publicité préparée préalablement pour l'endroit d'affectation le plus proche par rapport au terminal utilisateur, lorsque la musique est lue pour une durée prédéterminée ou à une fréquence prédéterminée (S160).

10. Procédé selon la revendication 1, l'étape de lecture (S110) comprenant en outre une étape de calcul par le serveur de rangs pour la musique correspondante à un endroit d'affectation correspondant, mettant à disposition un menu recommandé de la musique correspondante au terminal utilisateur qui a transmis des données musicales, et réception d'une réponse (S180).

11. Procédé selon la revendication 10, l'étape de lecture (S110) étant réalisée à la transmission au terminal utilisateur de données musicales en partant des données musicales en tête durant l'étape de calcul du rang parmi les données musicales associées à l'endroit correspondant.

12. Procédé selon la revendication 10, l'étape de calcul du rang (S180) comprenant en outre une étape de mise à disposition de carte musicale pour la transmission au terminal utilisateur de données cartographiques dans lesquelles un artiste ou un titre de musique placé en tête pour chaque endroit d'affectation prédéterminé est indiqué sur une carte du monde ou une carte d'une certaine région (S200).

13. Procédé selon la revendication 1, comprenant en outre : une étape de saisie d'informations pour la réception, du serveur au terminal utilisateur, des noms d'artistes préférés et le stockage de ces derniers (S20) ; et une étape de mise à disposition au terminal utilisateur d'une carte de fans pour la transmission de données cartographiées dans lesquelles une carte de distribution de terminaux utilisateur associée aux artistes préférés comme prévu ci-dessus est indiquée sur une carte du monde ou sur une carte d'une certaine région (S30).

14. Procédé selon la revendication 1, l'étape de lecture (S110) comprenant en outre une étape de transfert d'informations pour le transfert d'informations sur l'affectation, y compris un endroit d'affectation, un titre de musique, un identifiant du terminal utilisateur, durant laquelle la musique correspondante est envoyée au terminal utilisateur (S120).
